# EUROPEAN PATENT APPLICATION

(11) **EP 0 749 869 A1**
(43) Date of publication of application: **27.12.1996**
(21) Application number: 95109818.5
(22) Date of filing: 23.06.1995
(51) Int. Cl.: B60P 1/16

(54) **Lift means for a rear-dump truck**

(71) Applicant: Chang, Chin-fu, Pitou Hsiang, Changhua Hsien (TW); Hsieh, Po-chien, Minhsiung Hsiang, Chiayi Hsien (TW)
(72) Inventor: Chang, Chin-fu, Pitou Hsiang, Changhua Hsien (TW); Hsieh, Po-chien, Minhsiung Hsiang, Chiayi Hsien (TW)
(74) Representative: Casalonga, Axel

(57) **Abstract**

A lift means for a rear-dump truck includes two sets of cylinders (30) each disposed between the tipping body (41') and the support frame (40') of the truck, the cylinders each having a rod retractably received therein which is connected to a first rotatable means (10) disposed to an under side of the tipping body and the cylinder connected to a second rotatable means (20) which is disposed to the support frame (40').

## Description

The present invention relates to a lift means and more particularly, to a lift means disposed between the tipping body and the support frame of a rear-dump truck.

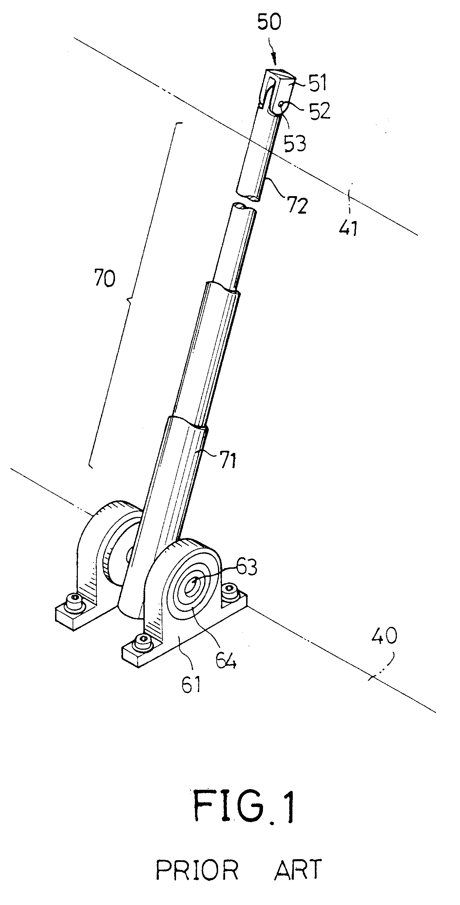

Referring to Fig. 1, a conventional rear-dump truck has a tipping body 41 disposed on a support frame 40 of the truck and the tipping body 41 can be raised on one end thereof by a lift means 70 disposed between the tipping body 41 and the support frame 40 such that sand, for example, in the tipping body 41 is dumped from the truck. The lift means 70 includes a bracket 50, a cylinder 71 and a pair of supports 61, the bracket 50 fixedly engaged to an under side of the tipping body 41 and having two lugs 51 extending therefrom for one end of a rod 72 pivotally engaged therebetween, the rod 72 retractably engaged to the cylinder 71. The cylinder 71 is pivotally disposed between the pair of supports 61 by a pin 63, each of the supports 61 has a bearing 64 disposed therein such that when the cylinder 71 is operated, the rod 72 pushes the tipping body 41 upwardly and the cylinder 71 is allowed to be pivoted about the pin 63 to an inclined position corresponding to the ground. However, the contact area between the pin 63 and the bearings 64 is so small that the supports 61 tend to be damaged because of the heavy weight of the tipping body 41 and the load within the tipping body 41. The conventional lift means 70 cannot bear a lateral force applied thereto, but unfortunately, lateral forces are often applied to the tipping body 41 in practice.

The present invention intends to provide a lift means which includes two sets of cylinders, each cylinder connected between a first rotatable means which is disposed to the tipping body and a second rotatable means which is disposed to the support frame such that the lift means in accordance with present invention not only provides a sufficient lifting force to the tipping body but sufficiently absorbs lateral forces applied to the tipping body such that the present invention mitigates and/or obviates the above-mentioned problems.

The present invention provides a lift means for a rear-dump truck, which includes two sets of cylinders each disposed between the tipping body and the support frame of the truck, the cylinders each having a rod retractably received therein which is connected to a first rotatable means disposed to an under side of the tipping body and the cylinder connected to a second rotatable means which is disposed to the support frame.

It is an object of the present invention to provide a lift means disposed between a tipping body and a support frame of a rear-dump truck, the lift means comprises two sets of cylinders and each of the cylinders being connected two rotary means which are respectively disposed to the tipping body and the support frame so as to provide sufficient lifting force and to absorb lateral force applied to the tipping body.

Other objects, advantages, and novel features of the invention will become more apparent from the following detailed description when taken in conjunction with the accompanying drawings.
In the drawings:
Fig. 1 is a perspective view of a conventional lift means disposed between the tipping body and the support frame wherein the tipping body and the support frame are shown in phantom lines;
Fig. 2 is an illustrative view of a lift means in accordance with the present invention disposed between the tipping body and the support frame wherein the tipping body and the support frame are shown in phantom lines;
Fig. 3 is a perspective view of the lift means disposed between the tipping body and the support frame wherein the tipping body and the support frame are shown in phantom lines;
Fig. 4 is an exploded view of the lift means in accordance with the present invention; and
Fig. 5 is a side elevational view, partly in section, of one set of the lift means in accordance with the present invention.

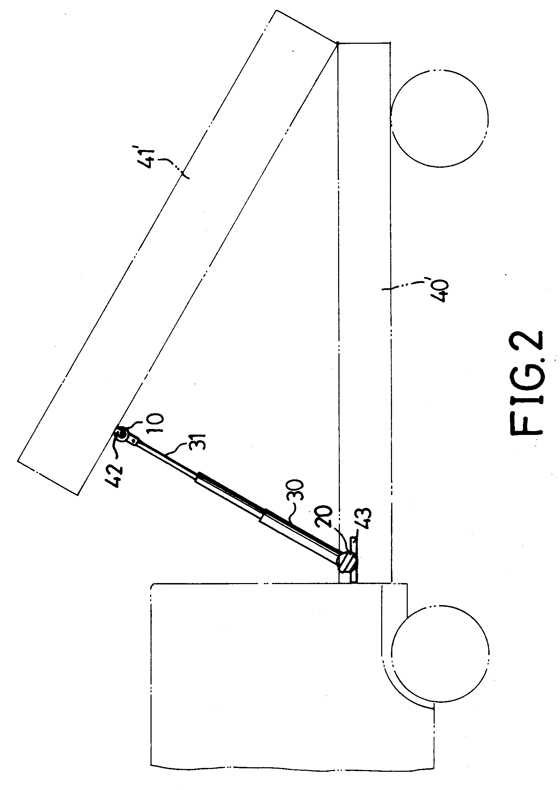

Referring to the drawings and initially to Fig. 2, the rear-dump truck has a support frame 40'and a tipping body 41' which is disposed on the support frame 40', a lift means in accordance with the present invention generally includes two sets of cylinders 30 disposed between the tipping body 41' and the support frame 40'. Each of the cylinders 30 has a rod 31 retractably received therein, the rod 31 being connected to a first rotatable means 10 at a distal end thereof and the first rotatable means 10 being fixedly connected to the tipping body 41', the cylinder 30 being connected to a second rotatable means 20 at a bottom end thereof and the second rotatable means 20 being fixedly connected to the support frame 40'.

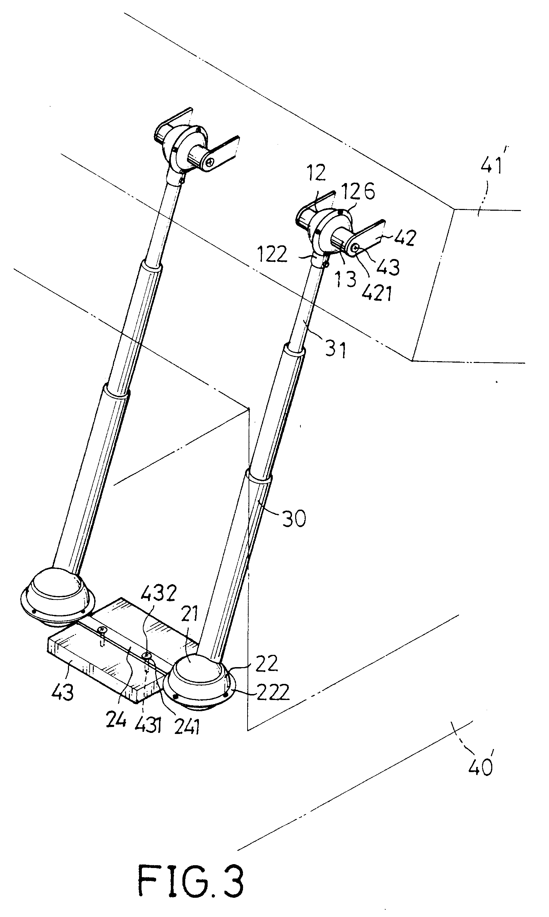

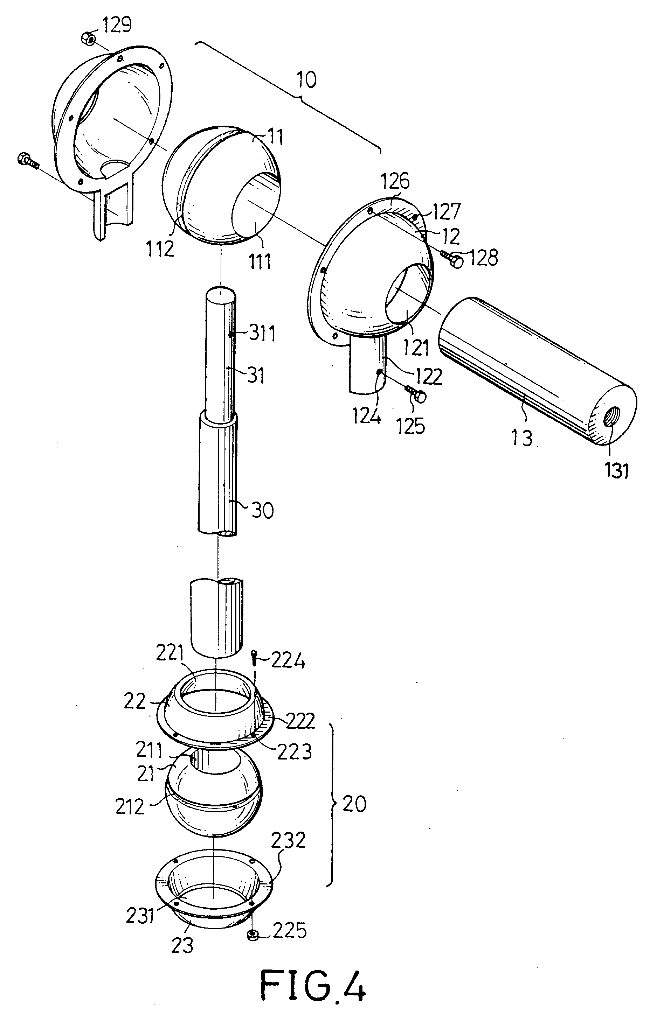

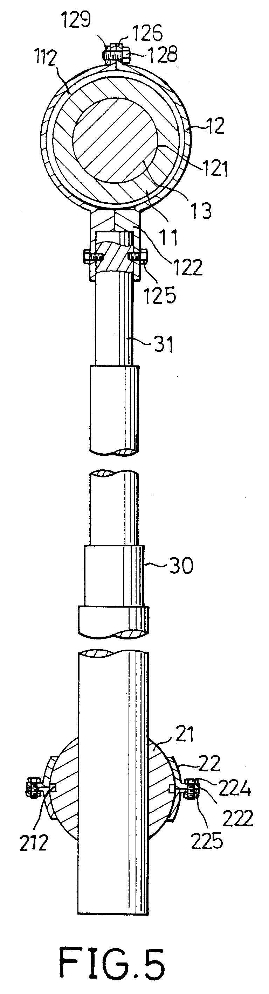

Referring to Figs. 3 through 5, the first rotatable means 10 includes a first ball 11, two first cups 12 and a pin 13, the first ball 11 being received between the two first cups 12 and having a first passage 111 transversely defined therein which passes through a center of the first ball 11, a groove 112 defined in the surface of the first ball 11 for a lubricant grease filled therein, each of the first cups 12 having a hole 121 defined in a bottom thereof and the hole 121 being in alignment with the first passage 111 for the pin 13 disposed between the two holes 121 and the first passage 111. Each of the first cups 12 has a first flange 126 extending radially from a periphery thereof and a neck 122 extending therefrom, the first flange 126 having a plurality of small holes 127 defined therein and the neck 122 having a semi-circular section corresponding to the rod 31 for the rod 31 to be received between the two necks 122. The two first cups 12 are connected together by extending bolts 128 through the corresponding small holes 127 of each of the first flanges 126 of the two first cups 12 and threadedly engaging the bolts 128 to corresponding nuts 129. The rod 31 has a threaded recess 311 diametrically defined therein and each neck 122 has a hole 124 defined therein for a bolt 125 extending through the hole 124 of the neck 122 and threadedly engaging with the threaded recess 124 of the rod 31.

The pin 13 has two ends, each end thereof having a threaded cavity 131 defined therein and the tipping body 41' having two lugs 42 extending therefrom, each lug having a hole 421 defined therein to receive a bolt 43 extending through the hole 421 of the lug 42 and threadedly engaging with the threaded cavity 131 of the pin 13 such that the rod 31 is pivotally engaged to the tipping body 41'.

The second rotatable means 20 comprises a second ball 21, an upper second cup 22 and a lower second cup 23, the second ball 21 having a second passage 211 defined therein for the cylinder 30 to be fixedly engaged therewith and having a groove 212 defined in an outer periphery thereof for a lubricant grease to be filled therein, the second passage 211 passing through a center of the second ball 21. Each of the upper second cup 22 and the lower second cup 23 has a hole 221/231 defined in a bottom thereof which is in alignment with the second passage 211. Each of the upper second cup 22 and the lower second cup 23 has a second flange 222/232 extending radially from a periphery thereof, each of the second flanges 222/232 having a plurality of small holes 223 defined therein such that the second ball 21 is received between the upper second cup 22 and the lower second cup 23 by extending bolts 224 through each of the holes 223 of each the second flanges 222/232 of upper second cup 22 and the lower second cup 23 and threadedly engaging to a nut 225.

The two lower second cups 23 have a connecting element 24 connected therebetween, the connecting element 24 having a plurality of holes 241 defined therein, a block 43 disposed to an upper surface of the support frame 40' and having a plurality of threaded recesses 431 defined therein for bolts 432 extending through the holes 241 of the connecting element 24 and threadedly engaging with the threaded recesses 431.

Accordingly, there are two sets of cylinders 30 to provide a sufficient force to lift the tipping body 41' and the second balls 21 can absorb lateral forces applied to the tipping body 41'.

Although the invention has been explained in relation to its preferred embodiment, it is to be understood that many other possible modifications and variations can be made without departing from the spirit and scope of the invention as hereinafter claimed.

## Claims

1. A lift means for a rear-dump truck, said rear-dump truck having a support frame and a tipping body disposed on said support frame, said lift means comprising:
two sets of cylinders disposed between said tipping body and said support frame, each said cylinder having a rod retractably received therein, said rod connected to a first rotatable means at a distal end thereof and said first rotatable means being fixedly connected to said tipping body, said cylinder connected to a second rotatable means at a bottom end thereof and said second rotatable means being fixedly connected to said support frame.

2. The lift means as claimed in claim 1 wherein said first rotatable means includes a first ball, two first cups and a pin, said first ball received between said two first cups and having a first passage transversely defined therein and said first passage passing through a center of said first ball, each of said first cups having a hole defined in a bottom thereof and said hole being in alignment with said first passage for said pin disposed between said two holes and said first passage, each said first cup having a first flange extending radially from a periphery thereof and having a neck extending therefrom, said first flange having a plurality of small holes defined therein and said neck having a half-circular section for said rod received between said two necks, said two first cups connected together by extending a bolt through said corresponding small hole of each of the first flanges of the two first cups and threadedly engaging to a nut, said rod having a threaded recess diametrically defined therein and each neck having a hole defined therein for a bolt extending through said hole of said neck and threadedly engaging with said threaded recess of said rod.

3. The lift means as claimed in claim 2 wherein said pin has two ends, each end thereof having a threaded cavity defined therein and said tipping body having two lugs extending therefrom, each lug having a hole defined therein for a bolt extending through said hole of said lug and threadedly engaging to said threaded cavity of said pin.

4. The lift means as claimed in claim 1 wherein said second rotatable means comprises a second ball, an upper second cup and a lower second cup, said second ball having a second passage defined therein for said cylinder fixedly engaged therewith, said second passage passing through a center of said second ball, each of said upper second cup and said lower second cup having a hole defined in a bottom thereof, each said hole being in alignment with said second passage and each of said upper second cup and said lower second cup having a second flange extending radially from a periphery thereof, each said second flange having a plurality of small holes defined therein such that said second ball is received between said upper second cup and said lower second cup by extending a bolt through said holes of each said second flange of upper second cup and said lower second cup and threadedly engaged to a nut.

5. The lift means as claimed in claim 4 wherein said two lower second cups have a connecting element connected therebetween, said connecting element having a plurality of holes defined therein, a block disposed to an upper surface of said support frame and having a plurality of threaded recesses defined therein for bolts extending through said holes of said connecting element and threadedly engaging with said threaded recesses.
